# EUROPEAN PATENT APPLICATION

(11) **EP 4 410 504 A1**
(43) Date of publication of application: **07.08.2024**
(21) Application number: 23211508.9
(22) Date of filing: 22.11.2023
(51) Int. Cl.: B25J 15/00, B25J 15/02

(54) **A GRIPPING MODULE FOR GRIPPING A PARALLELEPIPED OR CUBOID BOX AND A GRIPPING HEAD FOR GRIPPING A MATRIX OF BOXES**

(30) Priority: 06.02.2023 IT 202300001884
(71) Applicant: Gea Procomac S.p.A., 43038 Sala Baganza (PR) (IT)
(72) Inventor: CHIARI, Marco, 43013 LANGHIRANO (PARMA) (IT)
(74) Representative: Dondi, Silvia

(57) **Abstract**

A gripping module (100) for gripping a parallelepiped or cuboid box (1) by acting on an open top (2) of the box (1), the gripping module (100) comprising at least a first pair of gripping organs (101) that are configurable in at least a first position in which each gripping organ (101) engages a lateral through opening (7) of the box (1) and a second position in which the gripping organ (101) is moved away from the through opening (7) of the box (1),
each gripping organ (101) comprising a pushing body (102) having a tooth (103) which projects outwardly of the gripping module (100), in the first position of the gripping organ (101) the pushing body (102) being within the box (1) and the tooth (103) fitting the through opening (7) from the inside of the box (1) towards the outside of the box (1), in the second position of the gripping organ (101) the pushing body (102) being within the box (1) and the tooth (103) being retracted inside the box (1) thus clearing the through opening (7).

## Description

The present invention relates to a gripping module for gripping a parallelepiped or cuboid box and a gripping head for gripping a matrix of boxes.

Resin boxes with an open top are usually employed as returnable boxes for parts and the like in factories. Due to the open top, these boxes cannot be suctioned like cardboard boxes.

Known solutions for handling these boxes envisage a fork or forklift which is inserted on a lower surface of the boxes. However, this equipment can only be used when there is a large open space beside the stacked boxes. In other solutions, forks are moved closer to the outer sides of a box and then are fitted in the through windows obtained in the sides.

Nevertheless, these systems may damage the content of the boxes due to the forks penetrating within the boxes from the outside. In particular, the boxes may contain bags which are randomly arranged, thus likely interfering with the lateral through windows. Therefore, there is a high risk that forks even puncture or tear up the bags.

From document US 2022/0040864 A1 it is known an apparatus for gripping and moving stacked boxes having an open top surface. The apparatus is moved to above a stacked uppermost box, a wedge member having a flat plate shape is inserted along outer surfaces of two opposite edges of an upper box, a claw provided to the wedge member is projected in a direction approaching the box and engaged with a lower surface of an outer flange of the box, and the box is lifted vertically upward and then a fall prevention hanger is driven on a lower side of the box to cause the box to be gripped by the handling apparatus and then moved by the robot arm. In this context, the technical task at the basis of the present invention is to propose a gripping module for gripping a parallelepiped or cuboid box and a gripping head for gripping a matrix of boxes, which overcome the drawbacks of the prior art cited above.

In particular, it is an object of the present invention to provide a gripping module for gripping a parallelepiped or cuboid box and a gripping head for gripping a matrix of boxes, which are less likely to damage the content with respect to known solutions.

The stated technical task and specified aims are substantially achieved by a gripping module for gripping a parallelepiped or cuboid box by acting on an open top of the box (1), the gripping module comprising:
- at least a first pair of gripping organs which are respectively mounted on first opposite lower edges of the gripping module, each gripping organ of the first pair of gripping organs being configurable in at least a first position in which it engages a lateral through opening of the box and in at least a second position in which the gripping organ is moved away from said through opening of the box,
characterised in that each gripping organ of the first pair of gripping organs comprises a pushing body having a tooth which projects outwardly of the gripping module, in the first position of the gripping organ the pushing body being within the box and the tooth fitting the through opening from the inside of the box towards the outside of the box, in the second position of the gripping organ the pushing body being within the box and the tooth being retracted inside the box thus clearing the through opening.

In accordance with a preferred embodiment of the invention, the gripping module further comprises a second pair of gripping organs which are respectively mounted on second opposite lower edges of the gripping module, each gripping organ of the second pair of gripping organs being configurable in at least a first position in which it engages a lateral through opening of the box and at least a second position in which the gripping organ is moved away from the through opening of the box.

Each gripping organ of the second pair of gripping organs comprises a pushing body having a tooth which projects outwardly of the gripping module, in the first position of the gripping organ the pushing body being within the box and the tooth fitting the through opening from the inside of the box towards the outside of the box, in the second position of the gripping organ the pushing body being within the box and the tooth being retracted inside the box thus clearing the through opening.

In accordance with an aspect of the invention, the gripping module further comprises actuating means which are operatively active on each pushing body so that, with the corresponding gripping organ in the first position and the second position, the pushing body is respectively configurable at a shorter or longer distance with respect to the through opening and the tooth is respectively inserted in the through opening or retracted within the box.

In a preferred embodiment of the invention, the actuating means comprise an articulated arms system hinged to the gripping module and to the corresponding pushing body.

In particular, the articulated arm system is also configured to lower or raise the pushing body with respect to the open top of the box.

In accordance with one embodiment of the invention, each gripping organ further comprises a retaining element configured to contact an upper flange of the box delimiting the open top.

The stated technical task and specified aims are substantially achieved by a gripping head for gripping a matrix formed by a plurality of parallelepiped or cuboid boxes adjacently arranged, the gripping head comprising a plurality of gripping modules according to the present invention.

In particular, the gripping head further comprises centering means for centering the gripping head with respect to the matrix.

In an example where the matrix comprises four boxes, the centering means comprises four side bars and a motor device for each of the bars. Each bar is operatively active on one side of the matrix.

Preferably, the motor devices are based on an absolute encoder and are synchronized.

Further characteristics and advantages of the present invention will more fully emerge from the non-limiting description of a preferred but not exclusive embodiment of a gripping module for gripping a parallelepiped or cuboid box and a gripping head for gripping a matrix of boxes, as illustrated in the accompanying drawings in which
- figures 1a and 1b illustrate two different types of boxes suitable for being used with the present invention, in perspective views;
- figure 2 is a perspective view of a gripping module according to the present invention, used for gripping the box of figure 1a;
- figures 3 to 5 illustrates a portion of the gripping module of figure 2, according to three different positions of the gripping module, in a lateral view taken by removing one of the long sides of the box;
- figure 6 is a perspective view of a gripping head according to the present invention, where the gripping head is gripping a matrix of boxes of figure 1a;
- figure 7 illustrates the gripping head of figure 6 while gripping a pallet, in a perspective view.

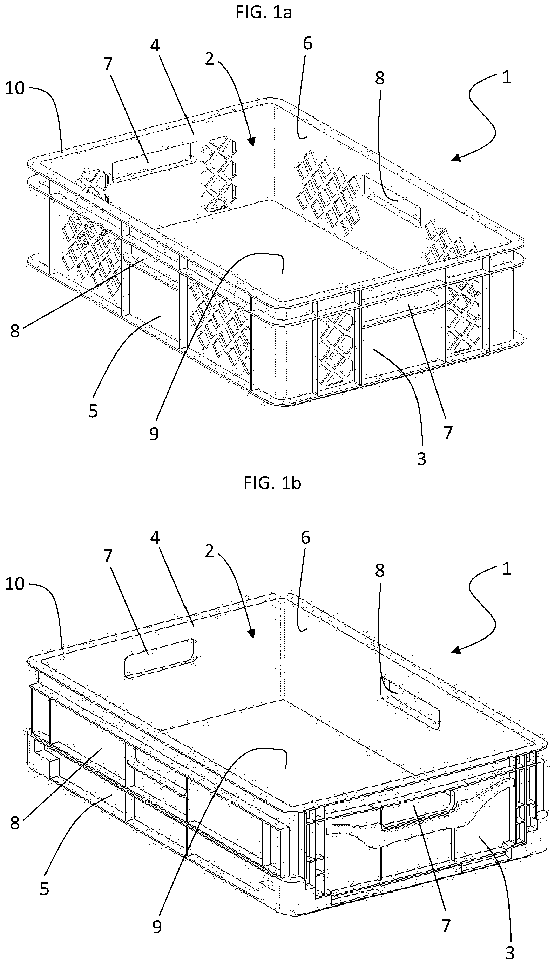

Reference numeral 1 denotes a box with an open top 2. Figures 1a and 1b illustrates two different types of boxes 1. In particular, the box 1 has a parallelepiped or cuboid shape with four lateral sides that are identified as follows:
- a first pair of opposite lateral sides 3, 4;
- a second pair of opposite lateral sides 5, 6.

The sides 3, 4 of the first pair are shorter than the sides 5, 6 of the second pair. Thus, in this context the sides of the first pair are called "short sides", whereas the sides of the second pair are called "long sides".

Each of the short sides 3, 4 has a through opening or window 7, that may be used for gripping the box 1, for example by hand by a human operator. The through windows 7 are obtained substantially in an upper middle part of the corresponding short side 3, 4.

In particular, the through windows 7 obtained in the short sides 3, 4 have a rectangular shape.

According to an embodiment, also each of the long sides 5, 6 has a through opening or window 8.

The through windows 8 are obtained substantially in an upper middle part of the corresponding long side 5, 6.

In particular, the through windows 8 obtained in the long sides 5, 6 have a rectangular shape.

The box 1 also has a bottom 9. As said, the top of the box 1 is open and is delimited by an upper flange 10.

Boxes 1 of this type are usually made of resins. However, they can also be made by metal material or wood or the like.

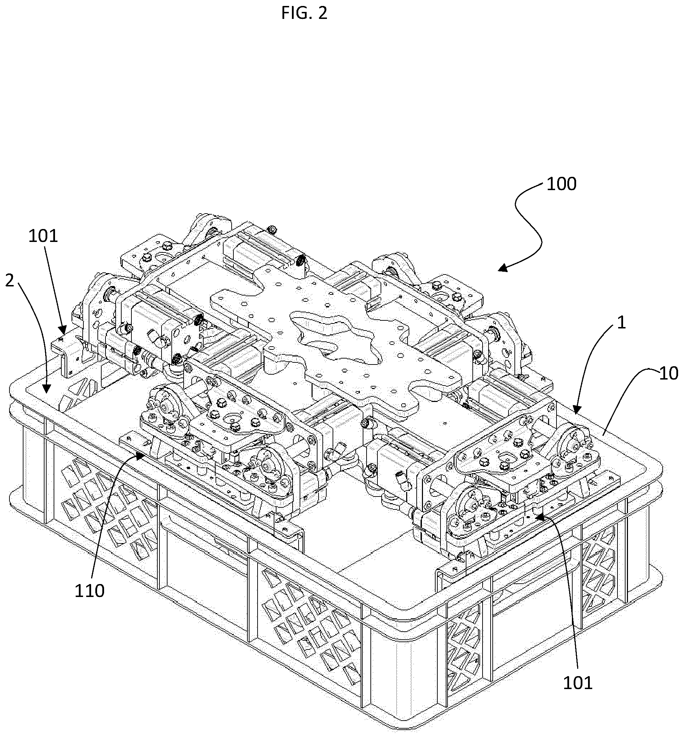

Reference numeral 100 denotes a gripping module for gripping a box 1 like the ones described above. The gripping module 100 is configured to grip the box 1 acting on the open top 2, as shown in figure 2.

The gripping module 100 comprises at least a first pair of gripping organs 101 which are respectively mounted on first opposite lower edges of the gripping module 100.

Each gripping organ of the first pair of gripping organs 101 is configurable in at least:
- a first position in which the gripping organ 101 engages a lateral through opening 7 of the box 1, and
- a second position in which the gripping organ 101 is moved away from the through opening 7 of the box 1.

In particular, the gripping organs of the first pair of gripping organs 101 are operatively active on the short sides 3, 4 of the box 1.

Thus, each gripping organ of the first pair of gripping organs 101 is configured to engage the through opening 7 of one short side 3, 4 of the box 1.

Advantageously, each gripping organ of the first pair of gripping organs 101 comprises a pushing body 102 having a tooth 103 which projects outwardly of the gripping module 100.

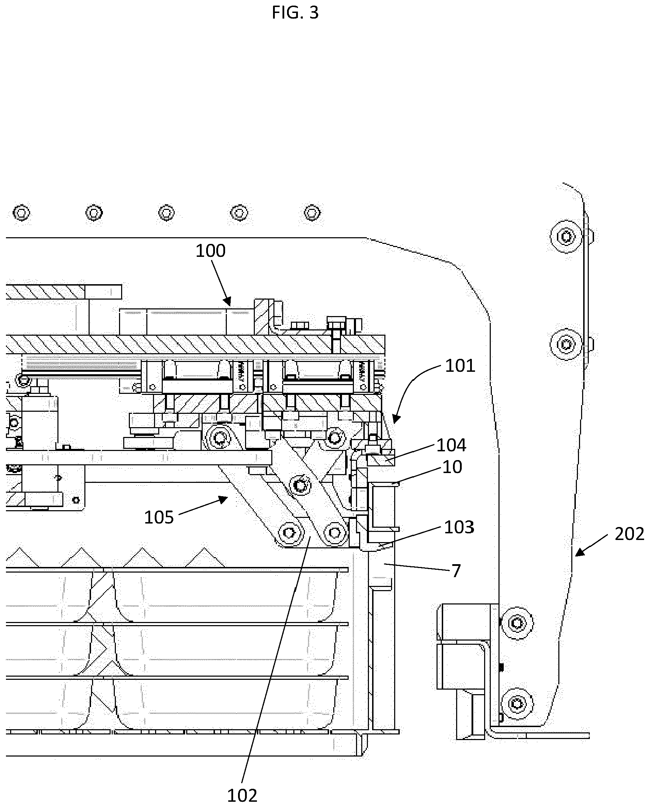

When the gripping organ 101 is in the first position (engaging the corresponding lateral through opening 7 of the box 1, like in figures 3-4), its pushing body 102 is within the box 1 and its tooth 103 fits the through opening 7 from the inside of the box 1 towards the outside of the box 1.

In particular, the gripping organ 101 engages the corresponding lateral through opening 7 from the inside of the box 1.

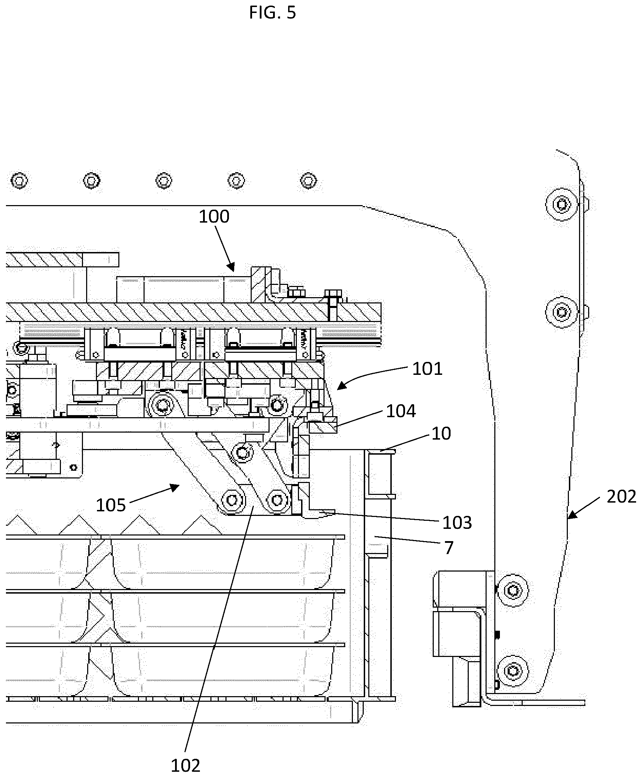

When the gripping organ 101 is in the second position (not engaging the through opening 7 of the box 1, like in figure 5), its pushing body 102 is within the box 1 and its tooth 103 is retracted inside the box 1. Thus, the through opening 7 is free from the tooth 103.

According to a preferred embodiment, shown in figure 2, the gripping module 100 further comprises a second pair of gripping organs 110 which are respectively mounted on second opposite lower edges of the gripping module 100.

Each gripping organ of the second pair of gripping organs 110 is configurable in at least:
- a first position in which the gripping organ 110 engages a lateral through opening 8 of the box 1, and
- a second position in which the gripping organ 110 is moved away from the through opening 8 of the box 1.

In particular, the gripping organs of the second pair of gripping organs 110 are operatively active on the long sides 5, 6 of the box 1.

Thus, each gripping organ of the second pair of gripping organs 110 is configured to engage the through opening 8 of one long side 5, 6 of the box 1.

In particular, the gripping organs of the second pair of gripping organs 110 are identical to the gripping organs of the first pair of gripping organs 101. Advantageously, each gripping organ of the second pair of gripping organs 110 comprises a pushing body 102 having a tooth 103 which projects outwardly of the gripping module 100.

When the gripping organ 110 is in the first position (engaging the corresponding lateral through opening 8 of the box 1), its pushing body 102 is within the box 1 and its tooth 103 fits the through opening 8 from the inside of the box 1 towards the outside of the box 1.

In particular, the gripping organ 110 engages the corresponding lateral through opening 8 from the inside of the box 1.

When the gripping organ 110 is in the second position (not engaging the through opening 8 of the box 1), its pushing body 102 is within the box 1 and its tooth 103 is retracted inside the box 1. Thus, the through opening 8 is free from the tooth 103.

According to one aspect of the invention, each gripping organ of the first pair of gripping organs 101 and of the second pair of gripping organs 110 further comprises a retaining element 104 configured to contact the upper flange 10 of the box 1.

As said, the pushing body 102 remains within the box 1 both when the corresponding gripping organ 101, 110 is in the first and in the second position. Nevertheless, the pushing body 102 changes its location within the box 1 in the passage of the gripping organ 101, 110 from the first to the second position.

In particular, the pushing body 102 is located at different distances from the corresponding through opening 7, 8.

In particular, the gripping module 100 comprises actuating means 105 operatively active on each pushing body 102 so that:
- when the gripping organ 101, 110 is in the first position, the pushing body 102 is configurable at a shorter distance with respect to the corresponding through opening 7, 8;
- when the gripping organ 101, 110 is in the second position, the pushing body 102 is configurable at a longer distance with respect to the corresponding through opening 7, 8.

Accordingly, when the pushing body 102 is at a shorter distance with respect to the corresponding through opening 7, 8, the tooth 103 is inserted in said through opening 7, 8.

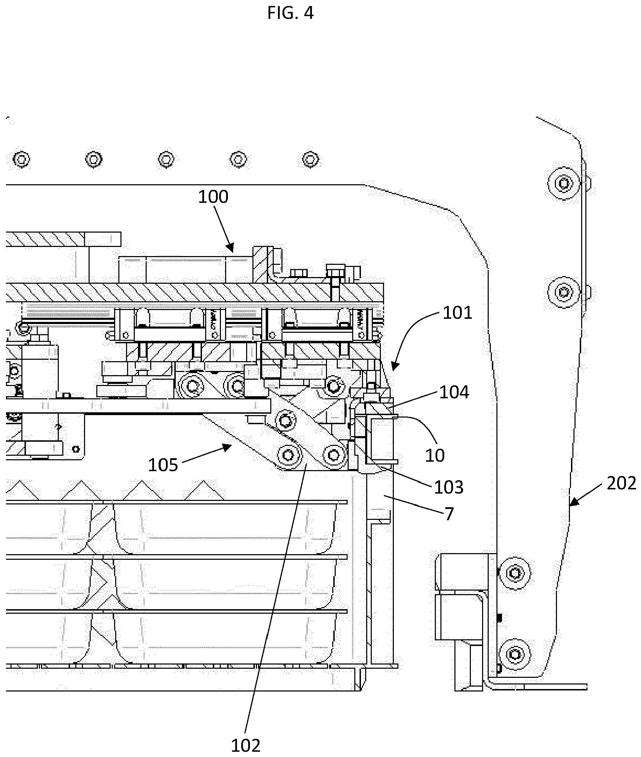

On the other hand, when the pushing body 102 is at a longer distance with respect to the corresponding through opening 7, 8, the tooth 103 is retracted in the box 1 (and thus extracted from the through opening 7, 8). In addition, the pushing body 102 may also be lowered or raised with respect to the gripping module 100. This may be seen by comparing figures 3 and 4.

In practice, the pushing body 102 can be lowered inside the box 101, thus it is moved away from the open top 2 or, that is the same, it is brought closer to the bottom 9 of the box 1.

In addition, the pushing body 102 can be raised inside the box 101, thus it is brought closer to the open top 2 or, that is the same, it is moved away from the bottom 9 of the box 1.

According to the embodiment illustrated herewith, the actuating means 105 comprise an articulated arms system hinged to the gripping module 100 and to the corresponding pushing body 102.

Preferably, the articulated arms system 105 is pneumatically driven.

In an alternative embodiment (not illustrated), the actuating means 105 are configured to slide the pushing body 102 both vertically and horizontally with respect to the box 1.

According to one aspect of the invention, the gripping module 100 comprises also an internal centering system for centering the gripping module 100 with respect to the box 1.

At it is known, a stack is obtained by arranging boxes in a substantially close contact state.

Reference numeral 200 denotes a gripping head for gripping a group of boxes 1.

In particular, the gripping head 200 may be used in a palletizer or depalletizer.

The gripping head 200 comprises a plurality of gripping modules 100 according to the invention. The movement of the gripping organs 101, 110 of all the gripping modules 100 is synchronized.

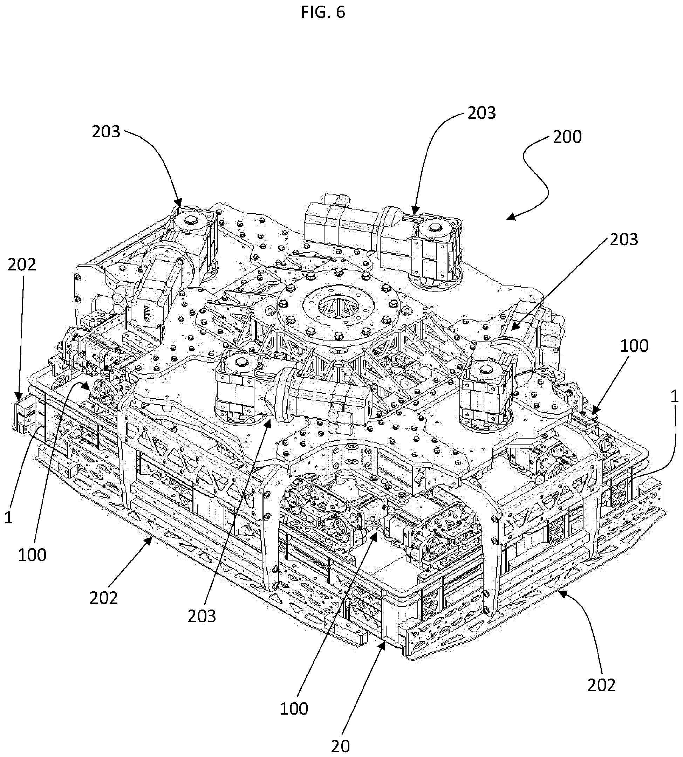

According to the embodiment illustrated herewith, a matrix 20 is composed of four boxes 1 that are adjacently arranged so as to form a 2x2 matrix. This is shown in figure 6.

The matrix 20 may also comprise a plurality of boxes 1 that is different from four.

The gripping head 200 further comprises centering means for centering the gripping head 200 with respect to the matrix 20.

Accordingly, the centering means comprises four side bars 202.

Each of the side bars 202 is operatively active on one side of the matrix 20.

Preferably, each of the side bars 202 is driven by a corresponding motor device 203.

The motor devices 203 are based on an absolute encoder and are synchronized.

The functioning of the gripping head for gripping a matrix of boxes, according to the present invention, is described below.

The gripping head 200 is used for palletizing stacks of boxes 1 that are filled with products. For example, the products are bags randomly arranged within the boxes 1. Alternatively, the products are bottles or cans or other packages.

In particular, the gripping head 200 is able to grip a group of boxes 1 that will concur to create a stack on a palletizing platform. In the example shown in figure 6, the gripping head 200 is able to grip a matrix 20 composed of four boxes 1, adjacently arranged in 2x2. Therefore, the gripping head 200 comprises four gripping modules 100.

Each gripping modules 100 preferably has four gripping organs 101, 110.

The gripping head 200 is moved closer to the matrix 20. The side bars 202 are in an enlarged configuration so that they surround the matrix 20 without contact. The position of one of the side bars 202 is shown for example in figure 5.

The internal centering systems of the gripping module 100 are closed. The gripping organs 101, 110 of all the gripping modules 100 are configured in a second position in which they do not engage the boxes 1. All the pushing bodies 102 and the teeth 103 are inside the boxes 1. This is visible in figure 5.

The gripping head 200 is slowly moved towards the matrix 20 so that each gripping module 100 approaches the open top 2 of the corresponding box 1.

The articulated arm systems 105 act on the pushing bodies 102 so as to move them from the second position to the first position. Thus, the teeth 103 are inserted within the respective through windows 7, 8 of the boxes 1. The retaining elements 104 are still above and distanced from the upper flanges 10 of the boxes 1. This is shown in figure 3.

The teeth 103 are then raised by raising the corresponding pushing bodies 102, so that they contact the upper limits of the through windows 7, 8. The retaining elements 104 are now in contact with the upper flanges 10 of the boxes 1. This is shown in figure 4.

In the meantime, the side bars 202 are brought in a restricted configuration so that they laterally enwrap and contact the matrix 20.

The internal centering systems of the gripping modules 100 are open. The gripping head 200 is then moved towards a palletizing platform.

The side bars 202 are moved again in the enlarged configuration so that the matrix 200 can be delivered on the palletizing platform.

The internal centering systems of the gripping modules 100 are closed again.

The gripping organs 101, 110 are now brought in the second position so that they do not interfere with the boxes 1 anymore.

In particular, the teeth 103 are retracted from the through windows 7, 8 of the boxes 1.

The gripping head 200 is then raised from the boxes 1.

The gripping head 200 repeats this cycle, which may be called "palletizing cycle", on further groups of four boxes 1, until a stack is created on the palletizing platform. Then, another stack is deposited on the first one, and so on.

The gripping head 200 may also be used for depalletizing empty boxes 1, according to similar steps described for the palletizing operations.

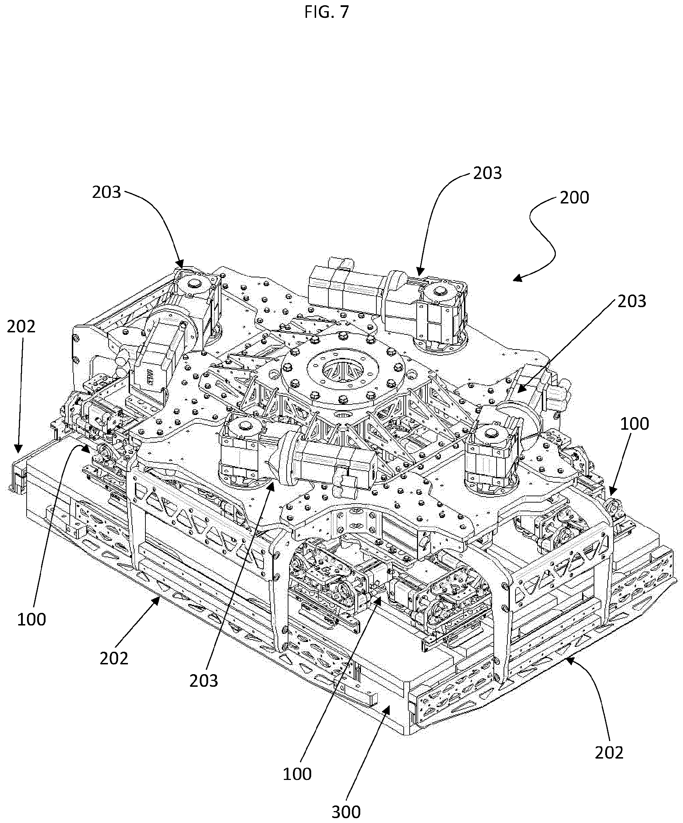

The gripping head 200 may also be used for gripping and delivering an empty pallet 300, like in figure 7.

The characteristics of the gripping module for gripping a parallelepiped or cuboid box and of the gripping head for gripping a matrix of boxes, according to the present invention, are clear, as are the advantages.

In particular, gripping organs are designed to engage the lateral through windows of the boxes from the inside. This is particularly advantageous in case of randomly arranged bags inside a box. In fact, the pushing bodies press the bags downwards and avoid them to interfere with the lateral through windows.

This allows the teeth to fit inside said through windows, avoiding any puncturing or tearing up of the bags. Acting on two opposite sides of the box, in particular on the short sides, achieves a high gripping stability. Acting on all four sides of the box increases stability even more.

## Claims

1. A gripping module (100) for gripping a parallelepiped or cuboid box (1) by acting on an open top (2) of the box (1), said gripping module (100) comprising:
- at least a first pair of gripping organs (101) which are respectively mounted on first opposite lower edges of the gripping module (100), each gripping organ of the first pair of gripping organs (101) being configurable in at least a first position in which it engages a lateral through opening (7) of the box (1) and in at least a second position in which said gripping organ (101) is moved away from said through opening (7) of the box (1),
**characterised in that** each gripping organ of said first pair of gripping organs (101) comprises a pushing body (102) having a tooth (103) which projects outwardly of the gripping module (100), in the first position of the gripping organ (101) the pushing body (102) being within the box (1) and the tooth (103) fitting the through opening (7) from the inside of the box (1) towards the outside of the box (1), in the second position of the gripping organ (101) the pushing body (102) being within the box (1) and the tooth (103) being retracted inside the box (1) thus clearing the through opening (7).

2. The gripping module (100) of claim 1, further comprising a second pair of gripping organs (110) which are respectively mounted on second opposite lower edges of the gripping module (100), each gripping organ of the second pair of gripping organs (110) being configurable in at least a first position in which it engages a lateral through opening (8) of the box (1) and at least a second position in which said gripping organ (110) is moved away from said through opening (8) of the box (1),
each gripping organ of said second pair of gripping organs (110) comprising a pushing body (102) having a tooth (103) which projects outwardly of the gripping module (100), in the first position of the gripping organ (110) the pushing body (102) being within the box (1) and the tooth (103) fitting the through opening (8) from the inside of the box (1) towards the outside of the box (1), in the second position of the gripping organ (110) the pushing body (102) being within the box (1) and the tooth (103) being retracted inside the box (1) thus clearing the through opening (8).

3. The gripping module (100) according to claim 1 or 2, further comprising actuating means (105) operatively active on each pushing body (102) so that, with the corresponding gripping organ (101, 110) in the first position and the second position, the pushing body (102) is respectively configurable at a shorter or longer distance with respect to the through opening (7, 8) and the tooth (103) is respectively inserted in the through opening (7, 8) or retracted within the box (1).

4. The gripping module (100) according to claim 3, wherein said actuating means (105) comprise an articulated arms system hinged to the gripping module (100) and to the corresponding pushing body (102).

5. The gripping module (100) according to claim 4, wherein said articulated arm system (105) is also configured to lower or raise the pushing body (102) with respect to the open top (2) of the box (1).

6. The gripping module (100) according to any one of the preceding claims, wherein each gripping organ (101, 110) further comprises a retaining element (104) configured to contact an upper flange (10) of the box (1) delimiting the open top (2).

7. A gripping head (200) for gripping a matrix (20) formed by a plurality of parallelepiped or cuboid boxes (1) adjacently arranged, said gripping head (200) comprising a plurality of gripping modules (100) according to any one of the preceding claims.

8. The gripping head (200) according to claim 7, further comprising centering means for centering the gripping head (200) with respect to the matrix (20).

9. The gripping head (200) according to claim 8, wherein the matrix (20) comprises four boxes (1), said centering means comprising four side bars (202) and a motor device (203) for each of said bars (202), each of said bars (202) being operatively active on one side of the matrix (20).

10. The gripping head (200) according to claim 9, wherein the motor devices (203) are based on an absolute encoder and are synchronized.
